# EUROPEAN PATENT APPLICATION

(11) **EP 1 077 547 A2**
(43) Date of publication of application: **21.02.2001**
(21) Application number: 00306752.7
(22) Date of filing: 08.08.2000
(51) Int. Cl.: H04H 1/00, H04N 5/76

(54) **System for receiving audio and/or video data and for selecting and storing this audio and/or video data**

(30) Priority: 12.08.1999 GB 9918931
(71) Applicant: Pace Micro Technology PLC, Saltaire, Shipley, BD18 3LF (GB)
(72) Inventor: Newell, Jason, Cottingley, West Yorkshire (GB)
(74) Representative: Wood, Graham

(57) **Abstract**

The invention provides a television system including a broadcast data receiver. The broadcast data receiver includes a data storage means into which can be sent viewer selected portions of data which are received, having been broadcast from a remote location. In one embodiment the data which is broadcast and received is in addition to the video and/or audio data broadcast to allow scheduled programmes to be generated and it is from this additional data that the viewer can select to store portions of the same which relates to specified subject matter or themes. The portions of data can then be subsequently selected for display via display screens and/or speakers such as those of a television set.

## Description

The invention to which this application relates is a television system which has a means for receiving video and/or audio data which is broadcast from a remote transmitter. The system then processes the data to generate video and/or audio via, for example, a television or other display screen and speakers to a user.

Typically, the data relating to video and/or audio and or auxiliary services are transmitted via a terrestrial system, satellite system or cable system to a number of broadcast data receivers, each typically provided in domestic or other premises. The receiver receives the data in an encoded digital format and then processes the same to allow the generation of video and/or audio signals which are sent to the television to allow the video and audio to be generated in the form of an identifiable television programme. Typically, sufficient data is transmitted to the set top box to allow a number of television programmes to be available at the same time for selecting by the viewer. When the user makes the selection, then the video and audio data for the selected program is processed.

However conventionally the generation of the video display and also for audio data requires the continued reception of data from the remote location so that as the data is received it can be processed and viewed and so on. The alternative is to use a data storage means such as a video cassette recorder (VCR) connected to the receiver apparatus to allow the recording of the data on a tape medium and this is of course well-known. However, video tape can become damaged through repeated use and the tapes have to be stored, identified and so on.

The aim of the present invention is to provide a means for a user to select portions of video and/or audio data for storage and to store said data in a memory means, preferably provided within the said set top box.

In a first aspect of the invention there is provided a television system including a broadcast data receiver for receiving video and/or audio data broadcast from a remote transmitter, said receiver provided with means to allow the processing of the video and/or audio data to generate video and audio for display via a television set or display screen and speakers characterised in that said system further includes a data storage means and control means to allow the selection by the viewer of portions of the video and/or audio data received by the broadcast data receiver and the selected portions of video and/or audio data when selected are stored in the data storage means for subsequent selective retrieval.

It is envisaged that the selection of the video and/or audio data portions can be utilised by the viewer to construct a "program" of the portions joined together for their personal use at any instant and, when the storage means is provided within the receiver, the data held therein can be selected by the user in the same manner as they would select a particular program for viewing via the receiver.

In one embodiment, additional video and/or audio data is transmitted to the receiver in addition to that which is transmitted to allow the generation of the scheduled television programmes. The additional data can be provided to facilitate the generation of different forms of video and/or audio and the data can be transmitted in groups, each relating to an identifiable subject matter or theme. In accordance with the invention the viewer can select to store portions of the data as they wish, with one portion relating to one of the groups of the transmitted data.

In one embodiment of the invention the user can select to store video data only so that, for example, they can select video data which they may subsequently wish to be displayed onscreen as a visual display.

In an alternative embodiment the user can select to store only audio data so as to subsequently provide an audio effect.

In a yet further embodiment the user may select and store both audio and video data and the apparatus and the system can further include a means for synchronising the audio and video portions which are selected and stored so that when the same are subsequently selected by the viewer to be generated on screen, the video and audio are synchronised.

In a further aspect of the invention there is provided a broadcast data receiver for a television system, said receiver receiving audio and/or video data from a remote transmitter to allow scheduled television programmes to be shown by said receiver processing the video and/or audio data to generate signals for display on a television screen or monitor and/or via speakers connected thereto and characterised in that the broadcast data receiver, upon receiving additional video and/or audio data, generates an on screen display to allow the user selection of portions of the additional data, and said selected portions of data are stored in a storage means provided in or connected to the broadcast data receiver for subsequent viewer selection thereafter for display.

A specific embodiment of the invention is now described with reference to the accompanying drawing.

In accordance with the system of the invention the broadcaster of the video and audio data, broadcasts a stream of video and audio data to a number of receivers and a viewer using a broadcast data receiver in accordance with the invention can, in a conventional manner, select to view programs from a list of scheduled programs for which the video and audio data is sent. The selection is typically made by using a remote control device which transmits the selection to the broadcast data receiver and which upon receiving the signal, identifies the appropriate data and processes the same to generate the selected television programme.

In accordance with this invention, in one embodiment, the broadcaster transmits video and/or audio data which is additional to the video and audio data required for the generation of the scheduled television programmes.

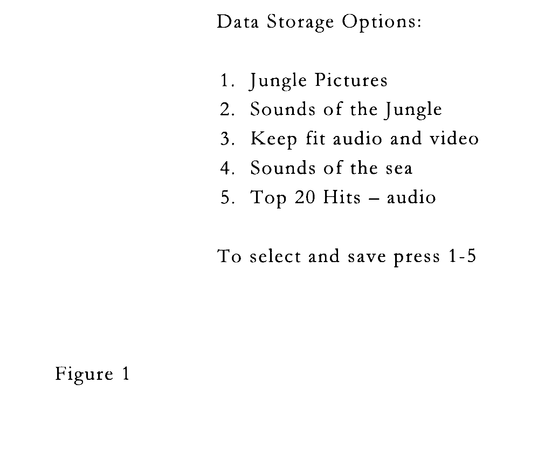

The additional data is transmitted in conjunction with auxiliary data which, when processed allows an on screen display to be generated, an example of which is illustrated in the accompanying Figure 1. The onscreen display provides a list of the subject matter or themes represented by the groups or portions of the additional data which is being transmitted. The viewer can then scroll'through the list, typically using their remote control and, if they are interested in the subject matter, select to store one or a combination of the data portions in accordance with their particular wishes. When selected, the data for that portion is stored by the broadcast data receiver in a data storage means, typically provided within the broadcast data receiver. The data is also provided with an identification code in order to allow the same to be retrieved for viewing at a subsequent time.

Thus in subsequent use the viewer is provided with the option, typically via an on screen display, to select to view a scheduled television programme in a conventional manner or to select to watch a portion of the data from the storage means which they have previously selected to be stored. There may be a number of different portions of data stored so that, for example, the viewer can select to watch a particular portion of data which suits their particular requirements at that time. For example, if they wish to exercise they may select a set or portion of data which includes music and a visual display appropriate to that , alternatively, if they are entertaining guests then they may select a set of data which acts as a background display only and so on.

In addition, in a further embodiment of the invention, advertising material may also be provided as part of the audio or video data portions which are available for selection by the user.

It may also be the case that if there are a number of users of the apparatus, each user may have their own preferred selections of portions of video and/or audio data held in the data storage means.

Thus it will be appreciated that the invention provides the ability for the user to select portions of data and to construct an audio and/or visual display which they can subsequently select, to suit their particular requirements at that time.

## Claims

1. A television system including a broadcast data receiver for receiving video and/or audio data broadcast from a remote transmitter, said receiver provided with means to allow the processing of the video and/or audio data to generate video and audio for display via a television set or display screen and speakers characterised in that said system further includes a data storage means and control means to allow the selection by the viewer of portions of the video and/or audio data received by the broadcast data receiver and the selected portions of video and/or audio data when selected are stored in the data storage means for subsequent selective retrieval.

2. A television system according to claim 1 characterised in that video and/or audio data is transmitted which is additional to that required for the provision of scheduled television programmes via the broadcast data receiver and the viewer can select to store portions of said additional data.

3. A television system according to claim 2 characterised in that the additional video ad/or audio data is transmitted in groups relating to identified themes and/or subject matter.

4. A television system according to claim 1 characterised in that the viewer can select to store video data only and subsequently select to generate a video only display onscreen.

5. A television system according to claim 1 characterised in that the viewer can select to store only audio data so as to subsequently provide an audio effect.

6. A television system according to claim 1 characterised in that the system includes a means for synchronising the audio and video portions which are held in the storage means when the same are selected from the storage means.

7. A broadcast data receiver for a television system, said receiver receiving audio and/or video data from a remote transmitter to allow scheduled television programmes to be shown by said receiver processing the video and/or audio data to generate signals for display on a television screen or monitor and/or via speakers connected thereto and characterised in that the broadcast data receiver, upon receiving additional video and/or audio data, generates an on screen display to allow the user selection of portions of the additional data, and said selected portions of data are stored in a storage means provided in or connected to the broadcast data receiver for subsequent viewer selection thereafter for display.

8. A broadcast data receiver according to claim 7 characterised in that the viewer selection of a portion of data from the storage means can be performed in the same manner using a remote control device to select from an on screen display, as with scheduled television programmes.
